# EUROPÄISCHE PATENTSCHRIFT

(11) **EP 0 543 834 B1**
(45) Veröffentlichungstag und Bekanntmachung des Hinweises auf die Patenterteilung: **07.09.1994**
(21) Anmeldenummer: 91913018.7
(22) Anmeldetag: 20.07.1991
(51) Int. Cl.: B01J 20/34, B01D 53/08

(54) **VERFAHREN UND ANORDNUNG ZUM REINIGEN VON KOHLENSTOFFHALTIGEM ADSORPTIONSMITTEL**
PROCESS AND DEVICE FOR CLEANING CARBON-CONTAINING ADSORPTION AGENTS
PROCEDE ET DISPOSITIF DE PURIFICATION D'ADSORBANTS CONTENANT DU CARBONE

(30) Priorität: 17.08.1990 DE 4026071
(43) Veröffentlichungstag der Anmeldung: 02.06.1993
(73) Patentinhaber: STEAG Aktiengesellschaft, 45128 Essen (DE)
(72) Erfinder: BRÜGGENDICK, Hermann, D-4224 Hünxe (DE)
(86) Internationale Anmeldenummer: EP9101367
(87) Internationale Veröffentlichungsnummer: WO9203224

(56) Entgegenhaltungen:
- EP-A- 0 293 688
- EP-A- 0 376 356
- DE-A- 3 426 059
- DE-A- 3 602 710
- GB-A- 872 984

## Beschreibung

Die Erfindung betrifft ein Verfahren zum Reinigen von kohlenstoffhaltigem Adsorptionsmittel, das bei der Rauchgasreinigung in einem Rauchgasbehandlungsreaktor verbraucht und aus dem Rauchgasbehandlungsreaktor ausgetragen wurde, wobei das ausgetragene Adsorptionsmittel in einem gesonderten thermischen Regenerations- bzw. Desorptionsapparat einem Desorptionsprozeß zum Abtrennen und Zersetzen von Schadstoffen unterworfen und das schadstoffreiche Desorptionsgas einer Nachbehandlung unterzogen wird. Ferner bezieht sich die Erfindung auf eine Anordnung zur Durchführung dieses Verfahrens.

Mit der Zunahme von mit kohlenstoffhaltigen Adsorptionsmitteln betriebenen Rauchgasreinigungsanlagen nach Anzahl und Kapazität wächst auch die in derartigen Reinigungsanlagen verbrauchte Adsorptionsmittelmenge, die zum Teil schwer schadstoffbelastet ist. Ein Verbrennen der kohlenstoffhaltigen Adsorptionsmittel ist nicht oder nur mit erheblichem Aufwand möglich, wobei vor allem anfallende Schwermetalle und Dioxine bisher nicht angemessen entsorgt werden konnten.

Aus der US-PS 4 500 501 ist ein Verfahren bekannt, bei dem eine Abscheidung von SO₂ und NOₓ durch katalytische Adsorption in zwei hintereinandergeschalteten Wanderbettreaktoren erfolgt. Das aus dem letzten Wanderbettreaktor ausgetragene kohlenstoffhaltige Adsorptionsmittel wird in einem nachgeschalteten Regenerator aufbereitet, teilweise ersetzt und in den ersten Rauchgasbehandlungsreaktor zurückgeführt. In diesem bekannten Prozeß gelingt es zwar, das Adsorptionsmittel zu reaktivieren; andererseits kann die Belastung des wiederverwendeten Adsorptionsmittels mit toxischen Stoffen, insbesondere Dioxine, Furane und Schwermetalle, insbesondere Hg zunehmen.

Unter diesen Umständen mußten die bei der Rauchgasreinigung verbrauchten schadstoffreichen Adsorptionsmittelmengen häufig mit entsprechendem Kostenaufwand Sonderdeponien zugeführt werden.

Aus der DE-A-3 426 059 ist ein Verfahren zur Desorption kohlenstoffhaltiger Adsorptionsmittel bekannt, bei dem Temperaturen von über 1000°C für erforderlich gehalten werden; weiterhin besteht die Gefahr eines Sauerstoffeintrags in den Desorber.

Der Erfindung liegt die Aufgabe zugrunde, das bei der Rauchgasreinigung verbrauchte stark schadstoffbelastete kohlenstoffhaltige Adsorptionsmittel mit vergleichsweise geringem Kostenaufwand und umweltfreundlich zu entsorgen.

Verfahrensmäßig wird diese Aufgabe erfindungsgemäß dadurch gelöst, daß beim Desorptionsprozeß bei Temperaturen von 350 bis 650 °C Schwermetalle ausgedampft und die übrigen Schadstoffe freigesetzt oder zersetzt werden und die Nachbehandlung des schadstoffreichen Desorptionsgases in einem Adsorptionsapparat unter Abscheiden von Schwermetallen durchgeführt wird, und daß das im wesentlichen Hg-freie Abgas des Adsorptionsapparates zur Weiterbehandlung geleitet wird, insbesondere zur Rauchgasreinigung zurückgeführt wird.

Die Temperatur reicht für die Zersetzung der Dioxine und Furane, die Ausdampfung leichtflüchtiger Metalle und die Freisetzung von gebundenem SO₂, HCl, HF o. dgl. aus. Durch die indirekte Erwärmung wird der Eintrag von Sauerstoff vermieden.

Die Anordnung zur Durchführung dieses Verfahrens zeichnet sich erfindungsgemäß dadurch aus, daß dem Adsorptionsmittelaustrag des Rauchgasbehandlungsreaktors ein thermischer Desorptionsapparat nachgeschaltet ist, der mit Mitteln zum indirekten Erwärmen des Adsorptionsmittels, einem Austrag zum Austragen des behandelten Adsorptionsmittels und einem Gas- und Dampfabzug zum Abführen des schadstoffreichen Adsorptionsgases versehen ist, und daß der Gas- und Dampfabzug des Desorptionsapparats mit einem Adsorptionsapparat verbunden ist, der zum Abscheiden von Hg aus dem Desorptionsgas geeignet ausgebildet ist.

Bei der Erfindung wird das mehr oder weniger stark schadstoffbelastete Adsorptionsmittel zunächst in einem unter Wärmezufuhr stattfindenden Desorptionsprozeß weitgehend von Schadstoffen befreit. Das so behandelte Adsorptionsmittel kann dann ohne großen Aufwand verbrannt oder auch zur Wiederverwendung regeneriert werden. Die Rückstände des zuvor gereinigten Adsorptionsmittels sind (nach der Verbrennung) problemlos zu entsorgen und fallen vor allem in nur geringen Mengen an.

Die Behandlungstemperatur und Behandlungsdauer richten sich nach den anfallenden Schadstoffen und dem gewünschten Wirkungsgrad des Desorptionsprozesses. Die Behandlungstemperatur liegt in bevorzugter Weiterbildung im Temperaturbereich zwischen 450 und 550°C.

Bei vergleichsweise preiswerten kohlenstoffhaltigen Adsorptionsmitteln, so beispielsweise bei Aktivbraunkohle, lohnt sich der Aufwand einer Adsorptionsmittelaufbereitung in der Regel nicht. Daher wird ein solches Adsorptionsmittel nach dessen Desorption verbrannt.

Bei Benutzung von Steinkohlepellets als Adsorptionsmittel kann es jedoch zweckmäßig sein, das verbrauchte Adsorptionsmittel nach Behandlung im thermischen Desorptionsapparat in den Rauchgasreinigungsprozeß zurückzuführen und - gegebenenfalls nach Ersatz von Verlusten - für die Rauchgasreinigung wiederzuverwenden.

Zweckmäßige Weiterbildungen der Erfindung sind in den Unteransprüchen gekennzeichnet.

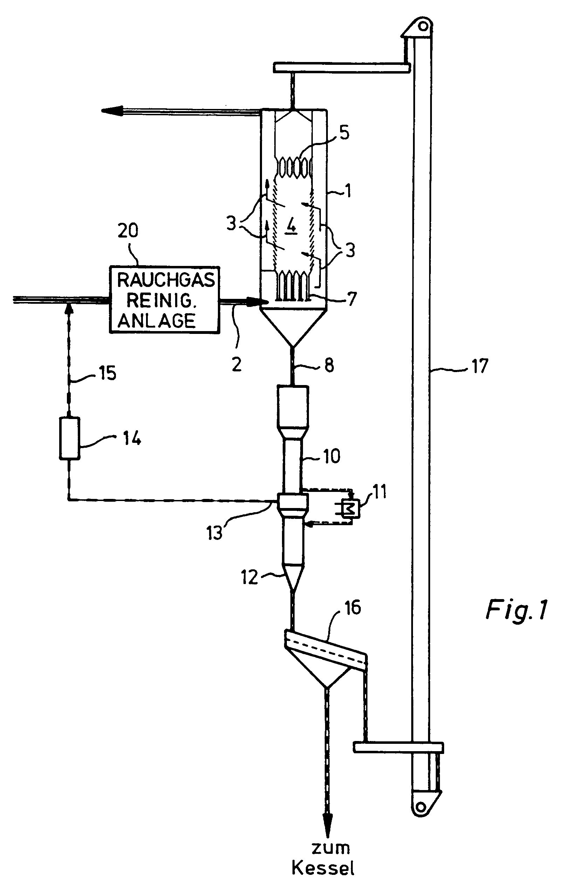

Im folgenden wird die Erfindung anhand eines in der Zeichnung schematisch dargestellten Ausführungsbeispiels näher erläutert.

Die einzige Figur zeigt ein Ausführungsbeispiel der bei der Durchführung des erfindungsgemäßen Verfahrens beteiligten Komponenten einschließlich eines Rauchgasbehandlungsreaktors.

Ein in der Zeichnung schematisch dargestellter Adsorptionsmittelreaktor 1 (Rauchgasbehandlungsreaktor) dient in dem beschriebenen Beispiel zum Abscheiden von Schwefeloxiden (SO₂/SO₃), Chlorwasserstoffen (HCl), Fluorwasserstoffen (HF), chlororganischen Komponenten (insbesondere Dioxinen und Furanen) und Schwermetallen aus Rauchgasen. Er ist an einer geeigneten Stelle, in der Regel hinter einer Rauchgasreinigungsanlage 20, in die Rauchgasleitung 2 eingebunden. Der dargestellte Adsorptionsmittelreaktor 1 steht für eine beliebige Anzahl von Adsorptions- und/oder Reduktionsstufen, die seriell und/oder parallel in den Rauchgasstrom eingebunden sein können. In dem dargestellten Beispiel ist der Adsorptionsmittelreaktor als sogenannter Querströmer ausgebildet, bei dem der Rauchgasstrom in Richtung der Pfeile 3 quer durch ein katalytisch wirkendes kohlenstoffhaltiges Adsorptionsmittelbett 4 geleitet wird. Das körnige, stückige oder granulatartige Adsorptionsmittel wird von einer kopfseitigen Aufgabevorrichtung 5 unter möglichst gleichmäßiger Verteilung über den Reaktorquerschnitt von oben dem Adsorptionsmittelbett 4 aufgeschichtet. Das Adsorptionsmittel wandert vertikal von oben nach unten. Verbrauchtes Adsorptionsmittel wird über einen aus mehreren Abzugsrohren 7 bestehenden Austrag bodenseitig aus dem Reaktor 1 ausgetragen. Die Abzugsrohre sind durch geeignete Mittel verschließbar, so daß der Austrag verbrauchten Adsorptionsmittels entweder kontinuierlich oder diskontinuierlich bzw. chargenweise erfolgen kann.

Verbrauchtes Adsorptionsmittel wird aus dem Reaktor 1 über eine hier als einfache Leitung dargestellte Fördervorrichtung 8 in einen thermischen Desorptionsapparat 10 geleitet. In letzterem wird das schadstoffbelastete Adsorptionsmittel über eine geeignete Behandlungsdauer wärmebehandelt, und zwar bei einer solchen Temperatur, daß ein Desorptionsprozeß stattfindet, bei dem die Schadstoffe von dem Adsorptionsmittel abgetrennt, insbesondere Dioxine zersetzt, gasförmige Verbindungen, wie SO₂, HCl, HF o. dgl., freigesetzt und leichtflüchtige Schwermetalle, insbesondere Hg, ausgedampft werden. Die Wärmezufuhr zum thermischen Desorptionsapparat, im folgenden auch "Desorber" genannt, erfolgt über einen Heizkreislauf 11, dessen Heizenergie in der Regel aus einem anlageneigenen Verbrennungsaggregat abgeleitet ist, d. h. das Verbrennungsabgas des Verbrennungsaggregats wird nicht direkt zur Erwärmung des Adsorptionsmittels eingesetzt.

Der Desorber hat einen bodenseitigen Austrag 12, aus dem das schadstoffarme Adsorptionsmittel zur Weiterbehandlung bzw. Verbrennung ausgetragen wird, und einen Gas- und Dampfabzug 13 zur Abführung des schadstoffreichen Desorptionsgases. Der Abzug 13 ist mit einem Adsorptionsapparat 14 verbunden, der vor allem dazu dient, aus dem Desorptionsgas den Hg-Dampf abzuscheiden. Erst danach kann das von Hg weitgehend befreite, im übrigen aber schadstoffreiche Desorptionsgas über eine Leitung 15 in den Rauchgasstrom vor der Rauchgasreinigungsanlage 20 zurückgeführt werden. Die Hg-Abscheidung im Adsorptionsapparat 14 hat den Vorteil, daß das von Hg befreite Desorptionsgas das Adsorptionsmittel im Reaktor 1 nicht zunehmend anreichern kann.

Das von Schadstoffen befreite Adsorptionsmittel, das am Austrag 12 des Desorbers 10 zur Verfügung steht, wird in der Regel in einem in der Zeichnung nicht dargestellten Kessel verbrannt. Bei hochwertigem steinkohlehaltigem Adsorptionsmittel beispielsweise in Form von Steinkohlepellets kann zumindest ein Teil der im Desorber 10 behandelten Adsorptionsmittelmenge gegebenenfalls nach einer Siebung 16 und nach weiterer Regeneration und Ersatz der Verluste in den Rauchgasreinigungskreislauf zurückgeführt werden. Zur Rückführung des thermisch regenerierten kohlenstoffhaltigen Adsorptionsmittels ist eine Förderanlage 17 vorgesehen, welche die körnigen oder granulatartigen Adsorptionsmittelteilchen wieder von oben der Aufgabevorrichtung 5 des Reaktors 1 zuführt.

Die Erfindung kann mit prinzipiell den gleichen Vorteilen bei allen Adsorptions- und Reduktionsstufen verwendet werden, die mit kohlenstoffhaltigem Adsorptionsmittel arbeiten. Die genaue Ausbildung der Fördervorrichtungen 8 und 17 sowie der dem Adsorptionsmitteldurchsatz bestimmenden Aufgabe- und Austragsmittel sind weder in der Zeichnung dargestellt noch für die Erfindung von entscheidender Bedeutung. Wichtig ist aber, daß Temperatur und Behandlungsdauer im Desorber 10 so eingestellt sind, daß der Desorptionsprozeß zuverlässig abläuft und die Schadstoffbeladung des Adsorptionsmittels weitgehend abgebaut wird.

## Patentansprüche

1. Verfahren zum Reinigen von kohlenstoffhaltigem Adsorptionsmittel, das bei der Rauchgasreinigung in einem Rauchgasbehandlungsreaktor verbraucht und aus dem Rauchgasbehandlungsreaktor ausgetragen wurde, wobei das ausgetragene Adsorptionsmittel in einem gesonderten thermischen Regenerationsapparat einem Desorptionsprozeß zum Abtrennen und Zersetzen von Schadstoffen unterworfen und das schadstoffreiche Desorptionsgas einer Nachbehandlung unterzogen wird,
**dadurch gekennzeichnet**,
daß beim Desorptionsprozeß ohne direkte Heizgaszufuhr bei Temperaturen von 350 bis 650 °C Schwermetalle ausgedampft und die übrigen Schadstoffe freigesetzt oder zersetzt werden und
die Nachbehandlung des schadstoffreichen Desorptionsgases in einem Adsorptionsapparat unter Abscheiden von Schwermetallen durchgeführt wird, und
daß das im wesentlichen Hg-freie Abgas des Adsorptionsapparats zur Weiterbehandlung geleitet wird, insbesondere zur Rauchgasreinigung zurückgeführt wird.

2. Verfahren nach Anspruch 1, dadurch gekennzeichnet, daß das Adsorptionsmittel nach der Desorption im thermischen Desorptionsapparat verbrannt wird.

3. Verfahren nach Anspruch 1, dadurch gekennzeichnet, daß das Adsorptionsmittel nach der Desorption in den Rauchgasbehandlungsreaktor zurückgeführt wird.

4. Verfahren nach Anspruch 3, dadurch gekennzeichnet, daß Verluste an Adsorptionsmittel im Rückführungszweig und/oder unmittelbar im Rauchgasbehandlungsreaktor ersetzt werden.

5. Anordnung zur Durchführung des Verfahrens nach einem der Ansprüche 1 bis 4, dadurch gekennzeichnet, daß dem Adsorptionsmittelaustrag (7) des Rauchgasbehandlungsreaktors (1) ein thermischer Desorptionsapparat (10) nachgeschaltet ist, der mit Mitteln (11) zum Erwärmen des Adsorptionsmittels ohne direkte Heizgaszufuhr, einem Austrag (12) zum Austragen des behandelten Adsorptionsmittels und einem Gas- und Dampfabzug (13) zum Abführen des schadstoffreichen Desorptionsgases versehen ist und daß der Gas- und Dampfabzug (13) des Desorptionsapparats (10) mit einem Adsorptionsapparat (14) verbunden ist, der zum Abscheiden von Hg aus dem Desorptionsgas geeignet ausgebildet ist.

6. Anordnung nach Anspruch 5, dadurch gekennzeichnet, daß der Ausgang des Adsorptionsapparats (14) über eine Rückführung (15) mit dem Rauchgasstrom (2) stromauf des Rauchgasbehandlungsreaktors (1) verbunden ist.

7. Anordnung nach Anspruch 5 oder 6, dadurch gekennzeichnet, daß dem Adsorptionsmittelaustrag (12) des Desorptionsapparats (10) eine Verbrennungsanlage nachgeordnet ist.

8. Anordnung nach Anspruch 5 oder 6, dadurch gekennzeichnet, daß eine Förderanlage (17) zum Rückführen wenigstens eines Teils des Adsorptionsmittels zum Rauchgasbehandlungsreaktor (1) vorgesehen ist.

9. Anordnung nach einem der Ansprüche 5 bis 8, dadurch gekennzeichnet, daß der Austrag (12) zum Austragen des behandelten Adsorptionsmittels bodenseitig am Desorptionsapparat (10) angeordnet ist.

## Claims

1. Method of cleaning an adsorption medium which contains carbon and which has been used for flue gas cleaning in a flue gas treatment reactor and discharged from the flue gas treatment reactor, wherein the discharged adsorption medium is subjected to a desorption process for dividing out and decomposition of noxious substances in a separate thermal regeneration apparatus and the desorption gas loaded with noxious substances undergoes an aftertreatment, characterised thereby that heavy metals are evaporated and the remaining noxious substances liberated or decomposed in the desorption process at temperatures of 350 to 650°C and without direct feed of fuel gas and the aftertreatment of the desorption gas loaded with noxious substances is carried out in an adsorption apparatus with separation out of heavy metals, and that the exhaust gas, substantially free of Hg, of the adsorption apparatus is conducted for further treatment, especially is fed back for flue gas cleaning.

2. Method according to claim 1, characterised thereby that the adsorption medium is combusted after the desorption in the thermal desorption apparatus.

3. Method according to claim 1, characterised thereby that the adsorption medium is fed back into the flue gas treatment reactor after the desorption.

4. Method according to claim 3, characterised thereby that the losses of adsorption medium are replaced in the feedback branch and/or directly in the flue gas treatment reactor.

5. Arrangement for carrying out the method according to one of claims 1 to 4, characterised thereby that connected downstream of the adsorption medium outlet (7) of the flue gas treatment reactor (1) is a thermal desorption apparatus (10), which is provided with means (11) for heating the adsorption medium without direct feed of fuel gas, a discharge (12) for discharging the treated adsorption medium and a gas and steam outlet (13) for taking off the desorption gas loaded with noxious substances, and that the gas and steam outlet (13) of the desorption apparatus (10) is connected with an adsorption apparatus (14), which is constructed to be suitable for the separating out of Hg from the desorption gas.

6. Arrangement according to claim 5, characterised thereby that the exit of the adsorption apparatus (14) is connected by way of a return feed (15) with the flue gas flow (2) upstream of the flue gas treatment reactor (1).

7. Arrangement according to claim 5 or 6, characterised thereby that a combustion installation is arranged downstream of the adsorption medium discharge (12) of the desorption apparatus (10).

8. Arrangement according to claim 5 or 6, characterised thereby that a conveyor installation (17) for feeding back at least a part of the adsorption medium to the flue gas treatment reactor (1) is provided.

9. Arrangement according to one of claims 5 to 8, characterised thereby that the discharge (12) for discharging the treated adsorption medium is arranged at the desorption apparatus (10) at the base side thereof.

## Revendications

1. Procédé pour épurer un agent d'adsorption contenant du carbone qui a été utilisé dans l'épuration des gaz de fumée dans un réacteur de traitement de gaz de fumée et qui est sorti du réacteur de traitement de gaz de fumée, l'agent d'adsorption sorti étant soumis, dans un appareil spécial de régénération thermique, à un procédé de désorption pour la séparation et la décomposition des matières nocives et le gaz de désorption riche en matières nocives est ensuite soumis à un post-traitement
caractérisé en ce que
dans le procédé de désorption, sans fourniture directe de gaz chauds, à des températures de 350 à 650°C, les métaux lourds s'évaporent et les matières nocives résiduelles se trouvent libérées ou décomposées et
le post-traitement du gaz de désorption riche en matières nocives est accompli dans un appareil d'adsorption avec séparation des métaux lourds et
en ce que le gaz d'échappement essentiellement sans Hg, à la sortie de l'appareil d'adsorption, est conduit à un plus ample traitement, en particulier pour l'épuration des gaz de fumée.

2. Procédé selon la revendication 1, caractérisé en ce que l'agent d'adsorption, après l'adsorption dans l'appareil de désorption thermique, est brûlé.

3. Procédé selon la revendication 1, caractérisé en ce que l'agent d'adsorption, après désorption, est ramené dans le réacteur de traitement de gaz de fumée.

4. Procédé selon la revendication 3, caractérisé en ce que les pertes de l'agent d'adsorption sont compensées dans la branche de retour et/ou directement dans le réacteur de traitement de gaz de fumée.

5. Agencement pour la mise en oeuvre du procédé selon l'une quelconque des revendications 1 à 4, caractérisé en ce que la sortie de l'agent d'adsorption (7) du réacteur de traitement de gaz de fumée (1) est suivie d'un appareil de désorption thermique (10), qui est pourvu de moyens 11 pour chauffer l'agent d'adsorption sans fourniture directe de gaz chaud, d'une sortie (12) pour la sortie de l'agent d'adsorption traité et d'une sortie de gaz et de vapeur (13) pour la sortie du gaz de désorption riche en matières nocives et en ce que la sortie de gaz et de vapeur (13) de l'appareil de désorption (10) est reliée à un appareil d'adsorption (14), qui est configuré pour la séparation de Hg et du gaz de désorption.

6. Agencement selon la revendication 5, caractérisé en ce que la sortie de l'appareil d'adsorption (14) est reliée par une conduite de retour (15), au courant de gaz de fumée (2), en amont du réacteur de traitement de gaz de fumée (1).

7. Agencement selon la revendication 5 ou 6, caractérisé en ce que l'installation de combustion est placée derrière la sortie de l'agent d'adsorption (12) de l'appareil de désorption (10).

8. Agencement selon la revendication 5 ou 6, caractérisé en ce qu'une installation de transport (17) pour le retour d'au moins une partie de l'agent d'adsorption vers le réacteur de traitement de gaz de fumée (1) est prévue.

9. Agencement selon l'une quelconque des revendications 5 à 8, caractérisé en ce que la sortie (12) de l'agent traité d'adsorption est agencée du côté fond de l'appareil de désorption (10).
